(19) Europäisches Patentamt
European Patent Office
Office européen des brevets

(11) **EP 4 596 626 A1**

(12) # EUROPEAN PATENT APPLICATION
published in accordance with Art. 153(4) EPC

(43) Date of publication:
**06.08.2025 Bulletin 2025/32**

(21) Application number: **23904047.0**

(22) Date of filing: **15.12.2023**

(51) International Patent Classification (IPC):
***C08L 67/04*** *(2006.01)* ***C08L 67/02*** *(2006.01)*
***C08J 5/18*** *(2006.01)*

(52) Cooperative Patent Classification (CPC):
**C08J 5/18; C08L 67/02; C08L 67/04**

(86) International application number:
**PCT/KR2023/020740**

(87) International publication number:
**WO 2024/128848 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 KR 20220176832**

(71) Applicant: **LG Chem, Ltd.**
**Yeongdeungpo-gu**
**Seoul 07336 (KR)**

(72) Inventors:
- **CHOI, Jung Yun**
  **Daejeon 34122 (KR)**
- **JEONG, Cheolhwan**
  **Daejeon 34122 (KR)**
- **LEE, Hokeun**
  **Daejeon 34122 (KR)**
- **JUNG, Joo Eun**
  **Daejeon 34122 (KR)**
- **CHOI, Jong Young**
  **Daejeon 34122 (KR)**
- **KIM, Chul Woong**
  **Daejeon 34122 (KR)**

(74) Representative: **Plasseraud IP**
**104 Rue de Richelieu**
**CS92104**
**75080 Paris Cedex 02 (FR)**

(54) # POLY(LACTIC ACID-B-3-HYDROXYPROPIONIC ACID) BLOCK COPOLYMER, AND FILM COMPRISING SAME

(57) The present disclosure provides a poly(lactic acid-b-3-hydroxypropionic acid) block copolymer composition comprising: poly(lactic acid-b-3-hydroxypropionic acid) block copolymer and poly(3-hydroxypropionic acid), wherein an average haze is less than 4.0, and a film comprising the same.

【FIG. 1】

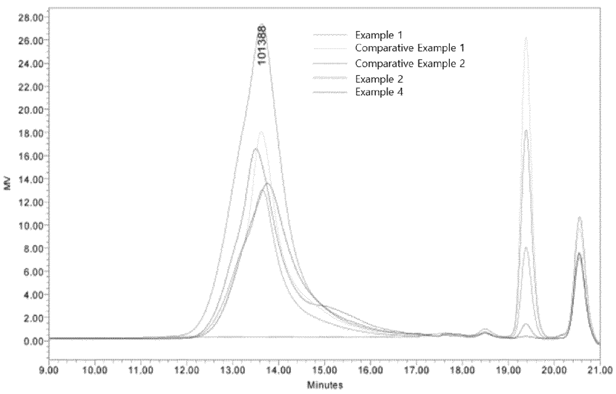




EP 4 596 626 A1

## Description

## FIELD OF THE INVENTION

CROSS-REFERENCE TO RELATED APPLICATION(S)

This application claims priority from and the benefit of Korean Patent Application No. 10-2022-0176832 filed on December 16, 2022 and Korean Patent Application No. 10-2023-0182742 filed on December 15, 2023 in the Korean Intellectual Property Office, the disclosures of which are incorporated herein by reference in their entirety.

The present disclosure relates to a poly(lactic acid-b-3-hydroxypropionic acid) block copolymer composition and a film comprising the same.

## BACKGROUND OF THE INVENTION

Polylactic acid (PLA) is a plant-derived resin obtained from plants such as corn, and is attracting attention as an environment-friendly material having biodegradable properties. Unlike petroleum-based resins such as polystyrene resins, polyvinyl chloride resins, polyethylene resins, etc., which are currently used, polylactic acid has effects of preventing depletion of petroleum-based resources and suppressing carbon dioxide emissions, and so it can reduce environmental pollution, which is a drawback of petroleum-based plastic products. As environmental pollution caused by waste plastics and the like has emerged as social problems, efforts have been made to expand the scope of application of polylactic acid to the fields of the products where general plastics (petroleum-based resins) were used, such as food packaging materials and containers, and electronic product cases.

However, polylactic acid has a lower impact resistance and heat resistance than conventional petroleum-based resins, and thus its application range is limited. Further, the tensile strength is poor, and transparency is required in accordance with the application field, but it is difficult to adjust the physical properties of polylactic acid, which has a limitation as a general-purpose resin.

In order to improve the above drawbacks, research is conducted on copolymers containing other repeating units in polylactic acid, and in particular, 3-hydroxypropionic acid is attracting attention as a comonomer. However, the physical properties expressed appear differently according to the degree to which 3-hydroxypropionic acid is introduced, and if the degree of introduction is not adjusted, it is likely to impair the inherent properties of polylactic acid.

## SUMMARY OF THE INVENTION

## TECHNICAL PROBLEM

It is an object of the present disclosure to provide a poly(lactic acid-b-3-hydroxypropionic acid) block copolymer composition having excellent transparency and a film comprising the same.

## TECHNICAL SOLUTION

According to an embodiment of the present disclosure, there is provided a poly(lactic acid-b-3-hydroxypropionic acid) block copolymer composition comprising: poly(lactic acid-b-3-hydroxypropionic acid) block copolymer and poly(3-hydroxypropionic acid), wherein an average haze measured by ASTM D1003 is less than 4.0.

According to another embodiment of the present disclosure, there is provided a film comprising the poly(lactic acid-b-3-hydroxypropionic acid) block copolymer composition.

**Hereinafter,** a poly(lactic acid-b-3-hydroxypropionic acid) block copolymer composition and a film comprising the same according to specific embodiments of the disclosure will be described in more detail.

Unless particularly mentioned herein, the term "including" or "containing" refers to including any element (or component) without any limitation, and should not be construed as excluding addition of other elements (or components).

In addition, unless otherwise mentioned herein, the weight average molecular weight and the number average molecular weight of poly(3-hydroxypropionic acid), poly(lactic acid-b-3-hydroxypropionic acid) block copolymer, etc. can be measured using a gel permeation chromatography(GPC). Specifically, the polymer or copolymer is dissolved in chloroform to a concentration of 2 mg/ml, then 20 $\mu\ell$ of the solution is injected into GPC, and GPC analysis is carried out at 40°C. At this time, chloroform is used as the mobile phase for GPC, the flow rate is 1.0 mL/min, and the column used is two Agilent Mixed-B units connected in series. RI Detector is used as a detector. The Mw values or the like can be obtained using a calibration curve formed using a polystyrene standard sample. Twelve kinds of the polystyrene standard samples are used with the molecular weight of 162 g/mol, 580 g/mol, 1,180 g/mol, 4,870 g/mol, 9,310 g/mol, 17,120 g/mol, 75,050 g/mol, 200,500 g/mol, 448,500 g/mol, 10,690,000 g/mol, 3,022,000 g/mol, and 6,545,000 g/mol.

In the present disclosure, the haze may be a value measured by NDH5000W manufactured by Nippon Denshoku.

According to an embodiment of the disclosure, there is provided a poly(lactic acid-b-3-hydroxypropionic acid) block copolymer composition comprising: poly(lactic acid-b-3-hydroxypropionic acid) block copolymer and poly(3-hydroxypropionic acid), wherein an average haze measured by ASTM D1003 is less than 4.0.

The present inventors have found that when a composition comprising a poly(lactic acid-b-3-hydroxypropionic acid) block copolymer contains a predetermined amount of poly(3-hydroxypropionic acid) in addition to the block copolymer, the composition has an average haze of less than 4.0 and thus is excellent in physical properties such as transparency, and completed the present disclosure.

Furthermore, a film comprising such a composition including a poly(lactic acid-b-3-hydroxypropionic acid) block copolymer also has excellent physical properties such as transparency, and thus can be applied to materials such as food packaging materials and optical films that require transparency.

A poly(lactic acid-b-3-hydroxypropionic acid) block copolymer composition according to an embodiment includes poly(lactic acid-b-3-hydroxypropionic acid) block copolymer and poly(3-hydroxypropionic acid).

**The** poly(lactic acid-b-3-hydroxypropionic acid) block copolymer composition may have an average haze measured by ASTM D1003 of less than 4.0, 3.9 or less, 3.8 or less, 0.5 **or** more and 3.7 or less. If the average haze of the poly(lactic acid-b-3-hydroxypropionic acid) block copolymer composition is too high, there is a problem that transparency is not exhibited.

Furthermore, the positional standard deviation of the haze value of the poly(lactic acid-b-3-hydroxypropionic acid) block copolymer composition may be 0.400 or less, 0.300 or less, or 0.100 or more and 0.250 or less.

The poly(lactic acid-b-3-hydroxypropionic acid) block copolymer composition may have a **UV** transmittance of 80% or more, 82% or more, 83% or more, 84% or more, 85% or more, 86% or more, 87% or more, 88% or more, 89% or more, or 90% or more. Furthermore, the upper limit of the **UV** transmittance is theoretically 100%, but may be, for example, 99.5% or less, 99.0% or less, 98.5% or less, or 98.0% or less. **The UV** transmittance can be measured by producing the composition into a film having a thickness of about 80 um and then attaching it to a UV-visible spectrometer (Agilent 8453), wherein the transmittance value in the 480 nm region can be confirmed.

**The** poly(lactic acid-b-3-hydroxypropionic acid) block copolymer composition according to one embodiment may contain the poly(3-hydroxypropionic acid) in an amount of more than 0% by weight and 7.0% by weight or less, 1.0% by weight or more and 6.5% by weight or less, 2.0% by weight or more and 6.0% by weight or less, 3.0% by weight or more and 6.0% by weight or less based on 100% by weight of the poly(lactic acid-b-3-hydroxypropionic acid) block copolymer composition.

As the poly(3-hydroxypropionic acid) is contained in a predetermined amount relative to the total content of 100% by weight of the composition, the composition appears to have a low average haze of less than 4.0, and can exhibit optical properties such as transparency. On the other hand, if the poly(3-hydroxypropionic acid) is contained in an excessively large amount, there is a problem that crystallization by phase separation is accelerated, and the average haze increases, which causes opaque.

The 'poly(3-hydroxypropionic acid)' includes a repeating unit derived from 3-hydroxypropionic acid, and may include a repeating unit represented by the following Chemical Formula 2.

[Chemical Formula 2]

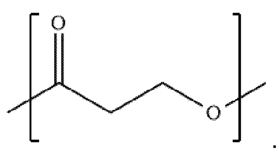

**The** poly(3-hydroxypropionic acid) can be subjected to a ring-opening polymerization with lactide described below to prepare the poly(lactic acid-b-3-hydroxypropionic acid) block copolymer. **Thus,** the poly(3-hydroxypropionic acid) contained in the composition may be poly(3-hydroxypropionic acid) that was introduced into a reactor to prepare the block copolymer, but remained in the composition without reacting with the lactide. Since the content of the poly(3-hydroxypropionic acid) remaining in the composition satisfies the above-mentioned range, the composition can have excellent optical properties such as transparency.

Furthermore, the poly(3-hydroxypropionic acid) contained in the composition may be poly(3-hydroxypropionic acid) that is used for further mixing with the block copolymer after the poly(lactic acid-b-3-hydroxypropionic acid) block copolymer is prepared by ring-opening polymerization.

**Thus,** the content of the poly(3-hydroxypropionic acid) contained in the composition may be the sum of the content of the residual poly(3-hydroxypropionic acid) unreacted with the lactide and the content of the residual poly(3-hydroxypropionic acid) added for further mixing with the block copolymer.

Meanwhile, the content of poly(3-hydroxypropionic acid) contained in the composition, particularly the content of residual poly(3-hydroxypropionic acid) unreacted with the lactide, can be controlled by a ratio of a vinyl group in the end group of the poly(3-hydroxypropionic acid), the number average molecular weight, and the like.

**The** poly(3-hydroxypropionic acid) contained in the poly(lactic acid-b-3-hydroxypropionic acid) block copolymer composition according to one embodiment may have a ratio of a vinyl group in the end group of 40 mol% or less, 35 mol% or less and 1 mol% or more, 30 mol% or less and 2 mol% or more, or 25 mol% or less and 3 mol% or more. **If** the ratio of a vinyl group in the end group of the poly(3-hydroxypropionic acid) is too high, chain extension of the poly(3-hydroxypropionic acid) does not occur well, and therefore, when poly(lactic acid-b-3-hydroxypropionic acid) block copolymer is prepared using the poly(3-hydroxypropionic acid), a large amount of unreacted poly(3-hydroxypropionic acid) remains, and the optical properties such as transparency of the composition containing the block copolymer may be deteriorated.

**The** vinyl group is generated by a side reaction that occurs during the polymerization of 3-hydroxypropionic acid into poly(3-hydroxypropionic acid), which acts as a factor that destroys the equivalent ratio in polycondensation where the equivalent ratio of each functional group (hydroxyl group, carboxyl group) is important, thereby inhibiting the reaction rate and making it difficult to obtain a polymer with a high molecular weight. Furthermore, if vinyl groups exist in poly(3-hydroxypropionic acid), there is a problem that chain extension of poly(3-hydroxypropionic acid) through further modification does not occur well. Therefore, since the poly(3-hydroxypropionic acid) has a small number of vinyl groups at the end group, it has the advantage that the above-mentioned drawbacks are fundamentally reduced.

The poly(3-hydroxypropionic acid) can be prepared by condensation polymerization of 3-hydroxypropionic acid under specific conditions, so that poly(3-hydroxypropionic acid) with a low ratio of a vinyl group in the end group can be prepared, for example, poly(3-hydroxypropionic acid) with a low ratio of vinyl groups can be prepared by controlling the polymerization temperature.

The ratio of the end group of the poly(3-hydroxypropionic acid) can be calculated by $^1$H-NMR measurement using a Buker 500MHz NMR model device to calculate the ratio of vinyl groups to the total end groups. For example, the polymer is dissolved in d-$CDCl_3$ at a concentration of 8 mg/ml, the measurement is carried out and the ratio can be calculated according to the following Mathematical Equation 1.

[Mathematical Equation 1]

$$vinyl\ group(\%) = \frac{2a}{(2a+b)} \times 100$$

in Mathematical Equation 1,

a is the area value of 1H of C=C of 6.3 ppm, and
b is the area value of 2H of HO-$CH_2$- of 3.8 ppm.

Furthermore, the poly(3-hydroxypropionic acid) may have a number average molecular weight of 5,000 or more and 300,000 or less, 7,000 or more and 250,000 or less, 8,000 or more and 200,000 or less, 9,000 or more and 180,000 or less, or 10,000 or more and 150,000 or less.

Furthermore, the poly(3-hydroxypropionic acid) may have a weight average molecular weight of 16,000 or more, 17,000 or more, 18,000 or more, 19,000 or more, or 20,000 or more, and 400,000 or less, 350,000 or less, 300,000 or less, 250,000 or less, 230,000 or less, 200,000 or less, 190,000 or less, 180,000 or less, 170,000 or less, or 60,000 or less.

If the number average molecular weight and/or weight average molecular weight of the poly(3-hydroxypropionic acid) is too low, the effect for improving the physical properties that the poly(3-hydroxypropionic acid) can impart may be reduced, and if the number average molecular weight and/or weight average molecular weight is too high, thermal decomposition may occur during the ring-opening polymerization process, which may rather result in the formation of vinyl groups, and reduce reactivity.

Furthermore, the poly(3-hydroxypropionic acid) may have a molecular weight distribution(Mw/Mn) of 1.6 or more, 1.7 or more, 1.8 or more, 1.9 or more, or 2.0 or more, and 3.4 or less, 3.3 or less, 3.2 or less, or 3.1 or less.

**The** poly(lactic acid-b-3-hydroxypropionic acid) block copolymer may be a block copolymer in which lactide is subjected to a ring-opening polymerization in poly(3-hydroxypropionic acid). **The** poly(lactic acid-b-3-hydroxypropionic acid) exhibits characteristics excellent in a tensile strength and an elastic modulus that the polylactic acid block has, and also the poly(3-hydroxypropionic acid) block lowers the glass transition temperature(Tg), increases flexibility, and improves mechanical properties such as impact strength, thereby being able to prevent the characteristic that the polylactic acid has poor elongation and easily exhibits brittleness.

Such a block copolymer refers to poly(3-hydroxypropionic acid)-polylactide block copolymers containing polylactide repeating units and poly(3-hydroxypropionic acid) repeating units. **The** category of the polymer referred to as "poly(lactic acid-b-3-hydroxypropionic acid) block copolymer" may include all the polymers obtained after the completion of the ring-opening polymerization and the repetitive unit formation process, for example, unpurified or purified polymers obtained after the completion of the ring-opening polymerization, polymers included in a liquid or solid resin composition before the formation of a product, polymers included in plastic or textile after the formation of a product, and the like.

The poly(3-hydroxypropionic acid) has a structure in which a hydroxyl group, a carboxyl group, or a vinyl group may exist at the end as described above, and when the hydroxy group and/or the alkoxy group, which is the end of the poly(3-hydroxypropionic acid), is added to the ring-opening polymerization reaction of the lactide monomer, the lactide monomer starts to be inserted from the end, and as result, the block copolymer can be prepared. Thus, if the content of a vinyl group in the end group of the poly(3-hydroxypropionic acid) is increased, ring-opening polymerization with lactide becomes difficult, and a large amount of residual lactide and poly(3-hydroxypropionic acid) are generated, which may result in deterioration of physical properties such as optical properties of the composition.

Meanwhile, the poly(3-hydroxypropionic acid) serves as a polymerization initiator and at the same time, is included as a repeating unit in the block copolymer, thus making it possible to improve mechanical properties such as flexibility and impact strength of the finally prepared block copolymer.

**The** poly(lactic acid-b-3-hydroxypropionic acid) block copolymer may be represented by the following Chemical Formula 1.

[Chemical Formula 1]

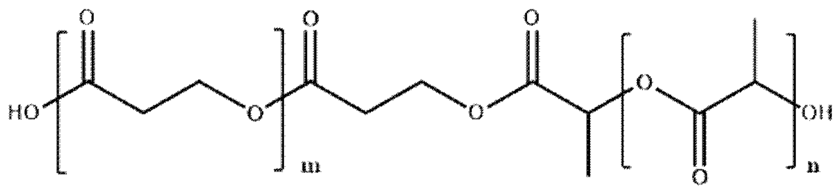

wherein in Chemical Formula 1,

m is an integer from 100 to 1000, and
n is an integer from 500 to 4000.

The m may be 120 to 350. The m means the repetition number of a monomer derived from 3-hydroxypropionic acid, and as it is introduced within the above range, it is possible to adjust physical properties such as transparency while maintaining the inherent physical properties of polylactic acid. More preferably, m may be 130 or more, 140 or more, 150 or more, 160 or more, 170 or more, 180 or more, 190 or more, or 200 or more; and 340 or less, 330 or less, 320 or less, 310 or less, or 300 or less.

The n may be 1000 to 2500. The n means the repetition number of a monomer derived from lactide. More preferably, n may be 1100 or more, 1200 or more, 130 or more, 1400 or more, or 1500 or more; and 2400 or less, 2300 or less, 2200 or less, 2100 or less, or 2000 or less.

Furthermore, the relative ratio of the monomers(m/n) may be 0.05 to 0.20. Within the m/n range, physical properties such as transparency can be adjusted while maintaining the inherent physical properties of polylactic acid. More preferably, the m/n may be 0.06 or more, 0.07 or more, or 0.08 or more; and 0.19 or less, 0.18 or less, 0.17 or less, 0.16 or less, or 0.15 or less. When the poly(3-hydroxypropionic acid) is included in an excessively small amount in the polylactic acid, the brittleness may be larger, and when the poly(3-hydroxypropionic acid) is included in an excessively large amount in the polylactic acid, the molecular weight may be reduced, and the processability and heat-resistant stability may be deteriorated.

A poly(lactic acid-b-3-hydroxypropionic acid) block copolymer composition, wherein:

the poly(lactic acid-b-3-hydroxypropionic acid) block copolymer includes a poly(3-hydroxypropionic acid) block, and the poly(3-hydroxypropionic acid) block is contained in an amount of 1% by weight or more and 9% by weight or less based on 100% by weight of the poly(lactic acid-b-3-hydroxypropionic acid) block copolymer composition.

**The** poly(lactic acid-b-3-hydroxypropionic acid) block copolymer has a weight average molecular weight (Mw) of 50,000 to 600,000 g/mol as measured using a gel permeation chromatography (GPC). More specifically, it has a weight

average molecular weight is 50,000 g/mol or more, 70,000 g/mol or more, or 100,000 g/mol or more, and 550,000 g/mol or less, 500,000 g/mol or less, 450,000 g/mol or less, 300,000 g/mol or less, 250,000 g/mol or less, 200,000 g/mol or less, or 150,000 g/mol or less. **If** the weight average molecular weight of the poly(lactic acid-b-3-hydroxypropionic acid) block copolymer is too small, the overall mechanical properties may be significantly deteriorated, and if the weight average molecular weight is too large, the process steps may be difficult and the processability and elongation may be reduced.

**The** poly(lactic acid-b-3-hydroxypropionic acid) block copolymer has a number average molecular weight (Mn) of 5,000 to 400,000 g/mol as measured using a gel permeation chromatography(GPC). More specifically, it has a number average molecular weight of 5,000 g/mol or more, 10,000 g/mol or more, or 20,000 g/mol or more, and 350,000 g/mol or less, 300,000 g/mol or less, 250,000 g/mol or less, 200,000 g/mol or less, 150,000 g/mol or less, 100,000 g/mol or less, or 90,000 g/mol or less, or 80,000 g/mol or less. **If** the number average molecular weight of the poly(lactic acid-b-3-hydroxypropionic acid) block copolymer is too small, the overall mechanical properties may be significantly deteriorated, and if the number average molecular weight is too large, the process steps may be difficult and the processability and elongation may be reduced.

The poly(lactic acid-b-3-hydroxypropionic acid) block copolymer has a polydispersity index(PDI) of 0.5 to 10.0, more specifically, 0.5 or more, 1.0 or more, 2.0 or more, 3.0 or more, or 4.0 or more, and 10.0 or less, 8.0 or less, 6.0 or less, or 5.0 or less.

A method for preparing the poly(lactic acid-b-3-hydroxypropionic acid) block copolymer composition may comprise a step of polymerizing 3-hydroxypropionic acid to prepare poly(3-hydroxypropionic acid); and a step of subjecting lactide to a ring-opening polymerization in poly(3-hydroxypropionic acid) to prepare a poly(lactic acid-b-3-hydroxypropionic acid) block copolymer.

For example, the step of preparing the poly(3-hydroxypropionic acid) may include a step of polymerizing 3-hydroxypropionic acid to prepare poly(3-hydroxypropionic acid).

The reaction temperature of the polymerization may be 70°C to 120°C, and may be 72°C or more, 74°C or more, 76°C or more, 78°C or more, or 80°C or more, and 115°C or less, 110°C or less, 105°C or less, 100°C or less, or 95°C or less. Furthermore, the reaction pressure of the polymerization may be a pressure of 0.5 torr to 10 torr, for example, 0.6 torr or more, 0.7 torr or more, 0.8 torr or more, or 1.0 torr or more, and 9 torr or less, 8 torr or less, 7 torr or less, 6 torr or less, or 5 torr or less. The reaction time for the polymerization may be appropriately determined taking into consideration the molecular weight, yield, and the like of the 3-hydroxypropionic acid oligomer produced, and preferably, the polymerization may be carried out for 1 hour to 30 hours, for example, 2 hours or more, 5 hours or more, 6 hours or more, 7 hours or more, or 8 hours or more, and 25 hours or less, 23 hours or less, 20 hours or less, 15 hours or less, or 10 hours or less.

The polymerization can be carried out in the presence of a sulfonic acid catalyst, wherein the sulfonic acid catalyst may be p-toluene sulfonic acid, m-xylene-4-sulfonic acid, 2-mesitylenesulfonic acid, or p-xylene-2-sulfonic acid. The catalyst may be used in an amount of 0.1 to 0.5 mol%, 0.15 to 0.4 mol%, or 0.2 to 0.3 mol% relative to 3-hydroxypropionic acid.

The polymerization conditions can control the content of vinyl groups contained in the end group of the poly(3-hydroxypropionic acid) produced, and for example, the vinyl group content of poly(3-hydroxypropionic acid) can be reduced by adjusting the reaction temperature, reaction pressure, reaction time, and catalyst usage amount, and the like for the polymerization, for example, by controlling the conditions, such as lowering the polymerization reaction temperature, shortening the reaction time as much as possible, and reducing the amount of catalyst used.

After preparing the poly(3-hydroxypropionic acid), the poly(3-hydroxypropionic acid), lactide, and catalyst can be polymerized to prepare a poly(lactic acid-b-3-hydroxypropionic acid) block copolymer.

Since the polymerization involves a lactide ring-opening polymerization reaction, it can be carried out in the presence of a lactide ring-opening catalyst. **The** catalyst used in the ring-opening polymerization may be any catalyst commonly used in the production of a polylactide resin by a ring-opening polymerization reaction of a lactide monomer. For example, the ring-opening polymerization can be carried out under at least one catalyst selected from the group consisting of an organometallic complex catalyst and an organic catalyst. The organometallic complex catalyst can be used without limitation in its composition as long as it is generally used for preparing a polylactide resin by a ring-opening polymerization reaction of a lactide monomer. For example, the organometallic complex catalyst can be a catalyst represented by the following Chemical Formula 3.

[Chemical Formula 3] $MA^1_pA^2_{2-p}$

wherein in Chemical Formula 1, M is Al, Mg, Zn, Ca, Sn, Fe, Y, Sm, Lu, Ti or Zr, p is an integer from 0 to 2, and $A^1$ and $A^2$ are each independently an alkoxy or carboxyl group.

More specifically, the catalyst may be tin(II) 2-ethylhexanoate ($Sn(Oct)_2$; hereinafter, also referred to as Tin Octoate).

On the other hand, the organic catalyst can be used without limitation in its composition as long as it is generally used for preparing a polylactide resin by a ring-opening polymerization reaction of a lactide monomer. For example, the

organic catalyst can be at least one selected from the group consisting of 1,5,7-triazobicyclo-[4,4,0]dec-5-ene(TBD), 1,8-diazabicyclo[5.4.0]undec-7-ene(DBU), 7-methyl-1,5,7-triazabicyclo[4.4.0]dec-5-ene(MTBD), 4-dimethylaminopyridine(DMAP), 4-(1-pyrrolidinyl)pyridine(PPY), imidazole, triazolium, thiourea, tertiary amine and creatinine.

The content of the catalyst may be 0.0001 to 10 mol%, 0.005 to 8 mol%, 0.05 to 5 mol%, or 0.09 to 3 mol% relative to 100 mol% of the lactide monomer. If the content of the catalyst relative to 100 mol% of the lactide monomer is too low, the polymerization activity may not be sufficient, and if the content of the catalyst is too high, the amount of residual catalyst in the prepared block copolymer becomes larger, which may lead to decomposition of the copolymer or a decrease in molecular weight due to depolymerization such as a transesterification reaction. Furthermore, the ring-opening polymerization may be carried out at 150 to 200°C for 5 minutes to 24 hours.

According to another embodiment of the present disclosure, a film comprising the poly(lactic acid-b-3-hydroxypropionic acid) block copolymer composition is provided.

The film comprising the poly(lactic acid-b-3-hydroxypropionic acid) block copolymer composition may have an average haze measured by ASTM D1003 of less than 4.0, 3.8 or less, 3.6 or less, or 0.5 to 3.4. If the average haze of the film is too high, there is a problem that transparency is not exhibited. In addition, the positional standard deviation of the haze value of the film may be 0.400 or less, 0.300 or less, or 0.100 or more and 0.200 or less.

Furthermore, the thickness of the film may be 500 μm or less, for example, 10 μm or more, 30 μm or more, 50 μm or more, 70 μm or more, 90 μm or more, 100 μm or more, 120 μm or more, 140 μm or more, 150 μm or more, and 480 μm or less, 460 μm or less, 450 μm or less, 430 μm or less, 400 μm or less, 380 μm or less, 350 μm or less, 330 μm or less, or 300 μm or less. Since the thickness of the film is within the above-mentioned range, the film has strong elasticity, excellent handleability, and good roll winding state or unwinding properties. In addition, the film can exhibit an average haze measured by ASTM D1003 of less than 4.0 within this thickness range.

## ADVANTAGEOUS EFFECTS

According to the present disclosure, a poly(lactic acid-b-3-hydroxypropionic acid) block copolymer composition having excellent transparency and a film comprising the same can be provided.

## BRIEF DESCRIPTION OF THE DRAWINGS

FIG. 1 is a graph showing the results of gel permeation chromatography analysis of Examples and Comparative Examples.

## DETAILED DESCRIPTION OF THE EMBODIMENTS

Hereinafter, the present disclosure will be described in more detail by way of examples. However, the following examples are for illustrative purposes only, and the contents of the present invention is not limited thereby.

### Preparation Example 1: Preparation of poly(3-hydroxypropionic acid) A

50 ml of a 60% 3-hydroxypropionic acid aqueous solution was placed in a 100 ml Schlenk flask in an oil bath, and approximately 60% of water in the 3-hydroxypropionic acid was removed at 105°C and 50 Torr for 2 hours. Subsequently, 0.4 parts by weight of p-toluene sulfonic acid(p-TSA) catalyst and 0.1 parts by weight of tin octoate based on 100 parts by weight of 3-hydroxypropionic acid were placed in a reaction flask, and subjected to a melt polycondensation reaction at 80°C and 1 Torr for 18 hours. After the reaction was completed, the reactants were dissolved in chloroform at a ratio of 10 g/50 mL, and then extracted with 500 mL of methanol to obtain poly(3-hydroxypropionic acid) A (ratio (content) of a vinyl group in the end group: 3 mol%, number average molecular weight: 10,000 g/mol, weight average molecular weight: 18,600 g/mol).

### Preparation Example 2: Preparation of poly(3-hydroxypropionic acid) B

50 ml of a 60% 3-hydroxypropionic acid aqueous solution was placed in a 100 ml Schlenk flask in an oil bath, and approximately 40% of water in the 3-hydroxypropionic acid was removed at 105°C and 50 Torr for 2 hours. Subsequently, 0.1 parts by weight of p-toluene sulfonic acid(p-TSA) catalyst based on 100 parts by weight of 3-hydroxypropionic acid was placed in a reaction flask, and subjected to a melt polycondensation reaction at 95°C and 1 Torr for 24 hours. After the reaction was completed, the reactants were dissolved in chloroform at a ratio of 10 g/50 mL, and then extracted with 500 mL of methanol to obtain poly(3-hydroxypropionic acid) B (ratio (content) of a vinyl group in the end group: 10 mol%, number average molecular weight: 10,000 g/mol, weight average molecular weight: 17,600 g/mol).

**Preparation Example 3: Preparation of poly(3-hydroxypropionic acid) C**

50 ml of a 60% 3-hydroxypropionic acid aqueous solution was placed in a 100 ml Schlenk flask in an oil bath, and approximately 60% of water in the 3-hydroxypropionic acid was removed at 105°C and 50 Torr for 2 hours. Subsequently, 0.4 parts by weight of p-toluene sulfonic acid(p-TSA) catalyst based on 100 parts by weight of 3-hydroxypropionic acid was placed in a reaction flask, and subjected to a melt polycondensation reaction at 105°C and 1 Torr for 8 hours. After the reaction was completed, the reactants were dissolved in chloroform at a ratio of 10 g/50 mL, and then extracted with 500 mL of methanol to obtain poly(3-hydroxypropionic acid) C (ratio (content) of a vinyl group in the end group: 22 mol%, number average molecular weight: 10,000 g/mol, weight average molecular weight: 17,600 g/mol).

**Preparation Example 4: Preparation of poly(3-hydroxypropionic acid) D**

50 ml of a 60% 3-hydroxypropionic acid aqueous solution was placed in a 100 ml Schlenk flask in an oil bath, and approximately 60% of water in the 3-hydroxypropionic acid was removed at 105°C and 50 Torr for 2 hours. Subsequently, 0.2 parts by weight of p-toluene sulfonic acid(p-TSA) catalyst based on 100 parts by weight of 3-hydroxypropionic acid was placed in a reaction flask, and subjected to a melt polycondensation reaction at 95°C and 1 Torr for 24 hours. After the reaction was completed, the reactants were dissolved in chloroform at a ratio of 10 g/50 mL, and then extracted with 500 mL of methanol to obtain poly(3-hydroxypropionic acid) D (ratio (content) of a vinyl group in the end group: 30 mol%, number average molecular weight: 10,000 g/mol, weight average molecular weight: 21,100 g/mol).

**Preparation Example 5: Preparation of poly(3-hydroxypropionic acid) E**

50 ml of a 60% 3-hydroxypropionic acid aqueous solution was placed in a 100 ml Schlenk flask in an oil bath, and approximately 60% of water in the 3-hydroxypropionic acid was removed at 105°C and 50 Torr for 2 hours. Subsequently, 0.4 parts by weight of p-toluene sulfonic acid(p-TSA) catalyst based on 100 parts by weight of 3-hydroxypropionic acid was placed in a reaction flask, and subjected to a melt polycondensation reaction at 95°C and 1 Torr for 24 hours. After the reaction was completed, the reactants were dissolved in chloroform at a ratio of 10 g/50 mL, and then extracted with 500 mL of methanol to obtain poly(3-hydroxypropionic acid) E (ratio (content) of a vinyl group in the end group: 44 mol%, number average molecular weight: 10,000 g/mol, weight average molecular weight: 16,400 g/mol).

**Preparation Example 6: Preparation of poly(3-hydroxypropionic acid) F**

50 ml of a 60% 3-hydroxypropionic acid aqueous solution was placed in a 100 ml Schlenk flask in an oil bath, and approximately 60% of water in the 3-hydroxypropionic acid was removed at 105°C and 50 Torr for 2 hours. Subsequently, 0.4 parts by weight of p-toluene sulfonic acid(p-TSA) catalyst based on 100 parts by weight of 3-hydroxypropionic acid was placed in a reaction flask, and subjected to a melt polycondensation reaction at 105°C and 1 Torr for 24 hours. After the reaction was completed, the reactants were dissolved in chloroform at a ratio of 10 g/50 mL, and then extracted with 500 mL of methanol to obtain poly(3-hydroxypropionic acid) F (ratio (content) of a vinyl group in the end group: 72 mol%, number average molecular weight: 10,000 g/mol, weight average molecular weight: 17,100 g/mol).

**Example** 1: **Preparation of block copolymer**

20 g of lactide, 2 g of poly(3-hydroxypropionic acid) A prepared in Preparation Example 1, and 0.009 mL of tin(II) 2-ethylhexanoate were placed in a 100 ml Schlenk flask, and dried in vacuum at 40°C and 1 Torr for 5 hours. Subsequently, the mixture was placed in an oil bath pre-heated to 180°C, and subjected to a polymerization reaction for 1 hour and 30 minutes to prepare a poly(lactic acid-b-3-hydroxypropionic acid) block copolymer (weight average molecular weight: 128,600 g/mol, number average molecular weight: 50,700 g/mol, polydispersity index(PDI): 2.5). The block copolymer was then recovered from the oil bath, and devolatilized at 140°C under a reduced pressure of 1 to 5 torr for 3 hours to remove the monomer.

**Example 2: Preparation of block copolymer**

A poly(lactic acid-b-3-hydroxypropionic acid) block copolymer (weight average molecular weight: 95,500 g/mol, number average molecular weight: 31,100 g/mol, polydispersity index(PDI): 3.1) was prepared in the same manner as in Example 1, except that poly(3-hydroxypropionic acid) B prepared in Preparation Example 2 was used instead of the poly(3-hydroxypropionic acid) A.

**Example 3: Preparation of block copolymer**

A poly(lactic acid-b-3-hydroxypropionic acid) block copolymer (weight average molecular weight: 87,100 g/mol, number average molecular weight: 31,200 g/mol, polydispersity index(PDI): 2.8) was prepared in the same manner as in Example 1, except that 4 g of poly(3-hydroxypropionic acid) B prepared in Preparation Example 2 was used instead of 2 g of the poly(3-hydroxypropionic acid) A.

**Example 4: Preparation of block copolymer**

A poly(lactic acid-b-3-hydroxypropionic acid) block copolymer (weight average molecular weight: 119,800 g/mol, number average molecular weight: 44,440 g/mol, polydispersity index(PDI): 2.7) was prepared in the same manner as in Example 1, except that poly(3-hydroxypropionic acid) C prepared in Preparation Example 3 was used instead of the poly(3-hydroxypropionic acid) A.

**Example 5: Preparation of block copolymer**

A poly(lactic acid-b-3-hydroxypropionic acid) block copolymer (weight average molecular weight: 115,200 g/mol, number average molecular weight: 37,200 g/mol, polydispersity index(PDI): 3.1) was prepared in the same manner as in Example 1, except that poly(3-hydroxypropionic acid) D prepared in Preparation Example 4 was used instead of the poly(3-hydroxypropionic acid) A.

**Comparative Example 1: Preparation of block copolymer**

A poly(lactic acid-b-3-hydroxypropionic acid) block copolymer (weight average molecular weight: 103,400 g/mol, number average molecular weight: 42,600 g/mol, polydispersity index(PDI): 2.4) was prepared in the same manner as in Example 1, except that poly(3-hydroxypropionic acid) E prepared in Preparation Example 5 was used instead of the poly(3-hydroxypropionic acid) A.

**Comparative Example 2: Preparation of block copolymer**

A poly(lactic acid-b-3-hydroxypropionic acid) block copolymer (weight average molecular weight: 113,800 g/mol, number average molecular weight: 31,900 g/mol, polydispersity index(PDI): 3.6) was prepared in the same manner as in Example 1, except that poly(3-hydroxypropionic acid) F prepared in Preparation Example 6 was used instead of the poly(3-hydroxypropionic acid) A.

**Comparative Example 3: Preparation of polymer blend**

(1) Preparation of polylactic acid

20 g of lactide, 2 ul of 1-octanol, and 0.002 mL of tin(II) 2-ethylhexanoate were placed in a 100 ml Schlenk flask, and dried in vacuum at 40°C and 1 Torr for 5 hours. Subsequently, the mixture was placed in an oil bath pre-heated to 180°C, and subjected to a polymerization reaction for 1 hour and 30 minutes to prepare polylactic acid (weight average molecular weight: 18,000 g/mol). The block copolymer was then recovered from the oil bath, and devolatilized at 140°C under a reduced pressure of 1~5 torr for 3 hours to remove the monomer.

(2) Preparation of polymer blend

100 wt.% of the polylactic acid and 5 wt.% of the poly(3-hydroxypropionic acid) B prepared in Preparation Example 2 were placed in a screw extruder (Thermo Scientific, MiniCTW), and extruded and mixed at 190°C to prepare a polymer blend.

**Comparative Example 4: Preparation of polymer blend**

A polymer blend was prepared in the same manner as in Comparative Example 3, except that 10 wt.% of poly(3-hydroxypropionic acid) B was used instead of 5 wt.% of poly(3-hydroxypropionic acid) B.

**Evaluation**

**1. Gel permeation chromatography(GPC) analysis**

The products obtained from Examples and Comparative Examples were analyzed by GPC, the molecular weight of the block copolymer was measured, and the results were shown in Table 1 below. The products were then analyzed by GPC-IR, the content of poly(3-hydroxypropionic acid) included in the products was measured, and the results were shown as "P(3HP) content X" in Table 1 below.

<GPC analysis conditions>

The product was dissolved in chloroform to a concentration of 2 mg/ml, then 20 $\mu\ell$ of the solution was injected into GPC, and GPC analysis was carried out at 40°C. At this time, chloroform was used as the mobile phase for GPC, the flow rate was 1.0 mL/min, and the column used was two Agilent Mixed-B units connected in series. RI Detector was used as a detector. The Mw value was obtained using a calibration curve formed using a polystyrene standard sample. Twelve kinds of the polystyrene standard samples are used with the molecular weight of 162 g/mol, 580 g/mol, 1,180 g/mol, 4,870 g/mol, 9,310 g/mol, 17,120 g/mol, 75,050 g/mol, 200,500 g/mol, 448,500 g/mol, 10,690,000 g/mol, 3,022,000 g/mol, and 6,545,000 g/mol.

**2. Nuclear magnetic resonance(NMR) analysis**

The products obtained from Examples and Comparative Examples were analyzed by NMR, and the total content of 'poly(3-hydroxypropionic acid)' included in the products and 'poly(3-hydroxypropionic acid) block' included in the block copolymer were measured, and the results were shown as "Total P(3HP) content (X+Y)" in Table 1 below. On the other hand, the content of 'poly(3-hydroxypropionic acid) block' was calculated as the difference between the "Total P(3HP) content (X+Y)" and "P(3HP) content X", and the results were shown as "P(3HP) block content Y" in Table 1 below.

<NMR analysis conditions>

Sample pretreatment: 10 mg of the sample was dissolved in 1 mL of chloroform, and then applied to the analysis.

$^1$H Solution NMR
Pulse program: zg30
Ns: 16
d1: 10 sec
Temperature: 298 K

3. **Haze Measurement**

A film having a thickness of 0.3T (300 $\mu$m) was manufactured using a hot press obtained from Examples and Comparative Examples. SPL was collected at the center of each roll at 0 m, 200 m, 400 m, 600 m, 800 m, and 1000 m from the start point of the roll using a haze meter (Nippon Denshoku NDH5000W), and the haze value of the film was measured by the ASTM D1003 method. The average value and standard deviation were calculated, and shown in Table 1 below.

[Table 1]

| | Type of P(3HP) | Content of P(3HP) vinyl group (mol%) | Weight average molecular weight of block copolymer (g/mol) | P(3HP) content X (wt.%) | P(3HP) block content Y (wt.%) | Total P(3HP) content (X+Y) (wt.%) | Average haze | Haze standard deviation |
|---|---|---|---|---|---|---|---|---|
| Example 1 | A | 3 | 128,600 | 3.0 | 7.0 | 10.0 | 3.4 | 0.153 |
| Example 2 | B | 10 | 95,500 | 4.0 | 6.0 | 10.0 | 3.3 | 0.151 |
| Example 3 | B | 10 | 87,100 | 7.0 | 13.0 | 20.0 | 3.7 | 0.211 |
| Example 4 | C | 22 | 119,800 | 5.5 | 4.5 | 10.0 | 3.3 | 0.173 |
| Example 5 | D | 30 | 115,200 | 6.0 | 4.0 | 10.0 | 3.4 | 0.181 |

(continued)

| | Type of P(3HP) | Content of P(3HP) vinyl group (mol%) | Weight average molecular weight of block copolymer (g/mol) | P(3HP) content X (wt.%) | P(3HP) block content Y (wt.%) | Total P(3HP) content (X+Y) (wt.%) | Average haze | Haze standard deviation |
|---|---|---|---|---|---|---|---|---|
| Comparative Example 1 | E | 44 | 103,400 | 7.7 | 3.3 | 10.0 | 4.0 | 0.507 |
| Comparative Example 2 | F | 72 | 113,800 | 9.0 | 1.0 | 10.0 | 8.2 | 0.971 |
| Comparative Example 3 | B | 10 | - | 5.0 | 0 | 5.0 | 5.3 | 0.181 |
| Comparative Example 4 | B | 10 | - | 10.0 | 0 | 10.0 | 31.2 | 0.170 |
| - P(3HP): Poly(3-hydroxypropionic acid) | | | | | | | | |

According to Table 1, it was confirmed that in Examples 1 to 5, the content(X) of poly(3-hydroxypropionic acid) included in the composition was 3.0 to 7.0 wt.%, and the average haze of the film produced therefrom was 3.7 or less, which exhibited excellent transparency characteristics.

On the other hand, it was confirmed that in Comparative Examples 1 and 2, the content(X) of poly(3-hydroxypropionic acid) included in the composition was 7.7 wt.% and 9.0 wt.%, respectively, and the average haze of the film produced therefrom was 4.0 or more, which exhibited lower transparency characteristics than those of Examples.

In addition, it was confirmed that the films produced from the compositions of Comparative Examples 3 and 4, which are polymer blends, had a significantly high haze of 5.3 or more, and in the case of Comparative Example 4, in which the content(X) of poly(3-hydroxypropionic acid) was 10.0 wt.%, the average haze was 31.2, which exhibited high opacity.

## Claims

**1.** A poly(lactic acid-b-3-hydroxypropionic acid) block copolymer composition comprising:

poly(lactic acid-b-3-hydroxypropionic acid) block copolymer and poly(3-hydroxypropionic acid),
wherein an average haze measured by ASTM D1003 is less than 4.0.

**2.** The poly(lactic acid-b-3-hydroxypropionic acid) block copolymer composition according to claim 1, wherein:
the poly(3-hydroxypropionic acid) is contained in an amount of more than 0% by weight and 7.0% by weight or less based on 100% by weight of the poly(lactic acid-b-3-hydroxypropionic acid) block copolymer composition.

**3.** The poly(lactic acid-b-3-hydroxypropionic acid) block copolymer composition according to claim 1, wherein:
the poly(3-hydroxypropionic acid) is contained in an amount of 3.0% by weight or more and 6.0% by weight or less based on 100% by weight of the poly(lactic acid-b-3-hydroxypropionic acid) block copolymer composition.

**4.** The poly(lactic acid-b-3-hydroxypropionic acid) block copolymer composition according to claim 1, wherein:
the poly(lactic acid-b-3-hydroxypropionic acid) block copolymer is a block copolymer in which lactide is subjected to a ring-opening polymerization in poly(3-hydroxypropionic acid).

**5. The** poly(lactic acid-b-3-hydroxypropionic acid) block copolymer composition according to claim 1 or 4, wherein:
the poly(3-hydroxypropionic acid) has a ration of a vinyl group of 40 mol% or less in the end group.

**6. The** poly(lactic acid-b-3-hydroxypropionic acid) block copolymer composition according to claim 1 or 4, wherein:
the poly(3-hydroxypropionic acid) has a number average molecular weight of 5,000 or more and 300,000 or less.

**7. The** poly(lactic acid-b-3-hydroxypropionic acid) block copolymer composition according to claim 1, wherein:

the poly(lactic acid-b-3-hydroxypropionic acid) block copolymer is represented by the following Chemical Formula 1:

[Chemical Formula 1]

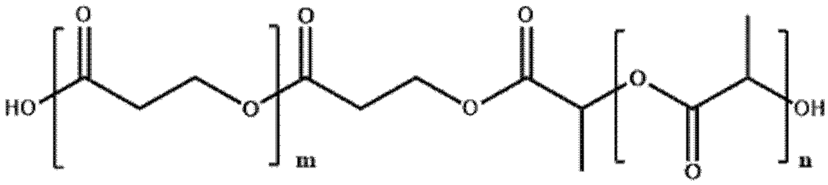

wherein in the Chemical Formula 1,
m is an integer from 100 to 1000, and
n is an integer from 500 to 4000.

8. **The** poly(lactic acid-b-3-hydroxypropionic acid) block copolymer composition according to claim 1, wherein: the poly(lactic acid-b-3-hydroxypropionic acid) block copolymer has a weight average molecular weight of 50,000 or more and 600,000 or less.

9. **The** poly(lactic acid-b-3-hydroxypropionic acid) block copolymer composition according to claim 1, wherein: the poly(lactic acid-b-3-hydroxypropionic acid) block copolymer composition has **a UV** transmittance of at least 80%.

10. A film comprising the poly(lactic acid-b-3-hydroxypropionic acid) block copolymer composition according to claim 1.

11. The film according to claim 10, wherein: the film has an average haze measured by ASTM D1003 of less than 4.0.

12. The film according to claim 11, wherein: the film has a positional standard deviation of the haze values of 0.400 or less.

13. The film according to claim 10, wherein: the film has a thickness of 500 μm or less.

【FIG. 1】

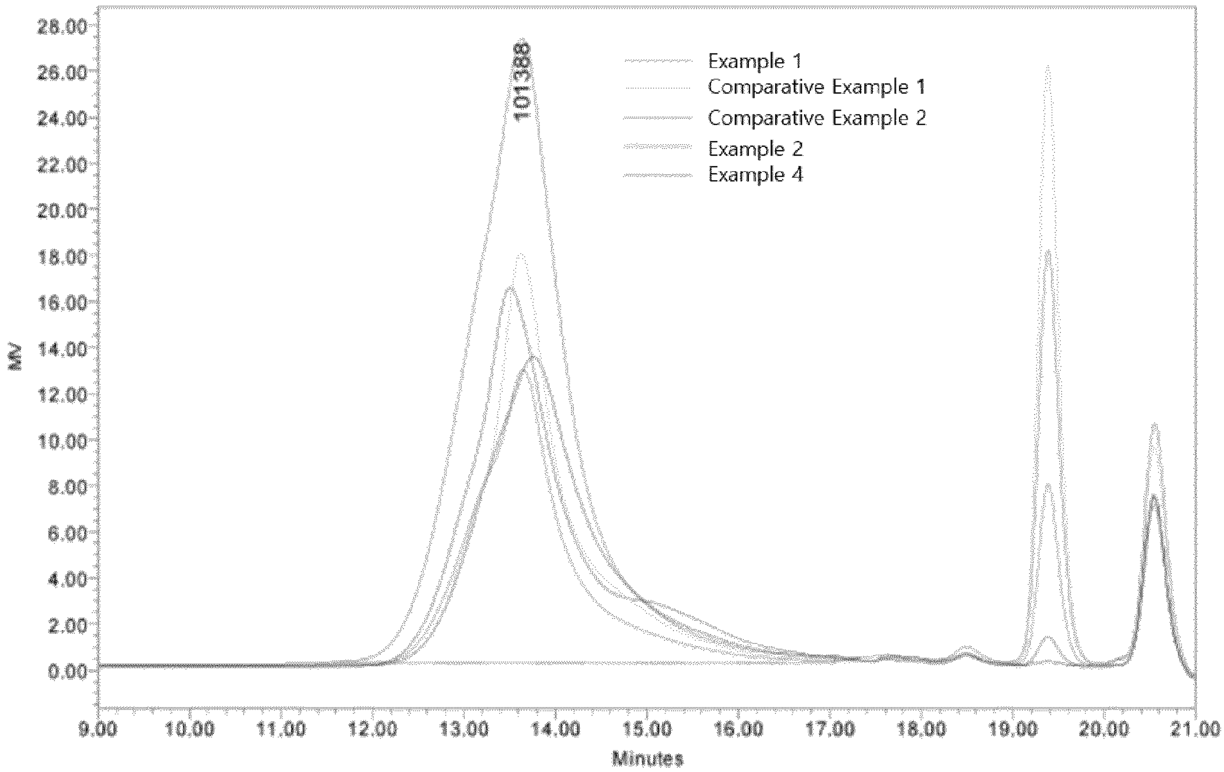
28.00
26.00
24.00
22.00
20.00
18.00
16.00
14.00
12.00
10.00
8.00
6.00
4.00
2.00
0.00
MV
101388
Example 1
Comparative Example 1
Comparative Example 2
Example 2
Example 4
9.00
10.00
11.00
12.00
13.00
14.00
15.00
16.00
17.00
18.00
19.00
20.00
21.00
Minutes

# INTERNATIONAL SEARCH REPORT

International application No.
**PCT/KR2023/020740**

## A. CLASSIFICATION OF SUBJECT MATTER

**C08L 67/04**(2006.01)i; **C08L 67/02**(2006.01)i; **C08J 5/18**(2006.01)i

According to International Patent Classification (IPC) or to both national classification and IPC

## B. FIELDS SEARCHED

Minimum documentation searched (classification system followed by classification symbols)

C08L 67/04(2006.01); B32B 1/02(2006.01); B65D 65/22(2006.01); C08G 63/06(2006.01); C08G 63/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리(락트산-b-3-히드록시프로피온산)블록공중합체(poly(lactic acid-b-3-hydroxypropionic acid) block copolymer), 폴리(3-하이드록시프로피온산)(poly(3-hydroxypropionic acid)), 헤이즈(haze)

## C. DOCUMENTS CONSIDERED TO BE RELEVANT

| Category* | Citation of document, with indication, where appropriate, of the relevant passages | Relevant to claim No. |
|---|---|---|
| Y | KR 10-2022-0121034 A (LG CHEM, LTD.) 31 August 2022 (2022-08-31)<br>See abstract; claims 1-10; and paragraphs [0037]-[0083]. | 1-13 |
| Y | US 2009-0054602 A1 (URADNISHECK, J.) 26 February 2009 (2009-02-26)<br>See claims 1-17; paragraphs [0084]-[0086]; and table 12. | 1-13 |
| A | KR 10-2021-0116363 A (CJ CHEILJEDANG CORPORATION) 27 September 2021 (2021-09-27)<br>See entire document. | 1-13 |
| A | US 2014-0227466 A1 (INNOVIA FILMS, LTD.) 14 August 2014 (2014-08-14)<br>See entire document. | 1-13 |
| A | KR 10-2022-0121216 A (LG CHEM, LTD.) 31 August 2022 (2022-08-31)<br>See entire document. | 1-13 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/020740**

| Patent document cited in search report | Publication date (day/month/year) | Patent family member(s) | Publication date (day/month/year) |
|---|---|---|---|
| KR 10-2022-0121034 A | 31 August 2022 | CN 115956096 A | 11 April 2023 |
| | | EP 4174106 A1 | 03 May 2023 |
| | | EP 4174106 A4 | 17 January 2024 |
| | | JP 2023-539228 A | 13 September 2023 |
| | | US 2023-0265232 A1 | 24 August 2023 |
| | | WO 2022-182154 A1 | 01 September 2022 |
| US 2009-0054602 A1 | 26 February 2009 | JP 2009-062532 A | 26 March 2009 |
| | | US 8182734 B1 | 22 May 2012 |
| KR 10-2021-0116363 A | 27 September 2021 | KR 10-2023-0032979 A | 07 March 2023 |
| | | WO 2023-033548 A1 | 09 March 2023 |
| US 2014-0227466 A1 | 14 August 2014 | CA 2440240 A1 | 26 September 2002 |
| | | CA 2440240 C | 06 July 2010 |
| | | CN 101835696 A | 15 September 2010 |
| | | CN 104477507 A | 01 April 2015 |
| | | CN 1242012 C | 15 February 2006 |
| | | CN 1501967 A | 02 June 2004 |
| | | DE 60206899 T2 | 27 July 2006 |
| | | DE 60206899 T8 | 01 February 2007 |
| | | DK 1381654 T3 | 20 March 2006 |
| | | EP 1381654 A1 | 21 January 2004 |
| | | EP 1381654 B1 | 26 October 2005 |
| | | EP 2181145 A1 | 05 May 2010 |
| | | EP 2181145 B1 | 20 April 2011 |
| | | EP 2195255 A1 | 16 June 2010 |
| | | EP 2195255 B1 | 24 October 2012 |
| | | ES 2250679 T3 | 16 April 2006 |
| | | HK 1203467 A1 | 30 October 2015 |
| | | JP 2004-525414 A | 19 August 2004 |
| | | JP 2009-009137 A | 15 January 2009 |
| | | JP 2011-107722 A | 02 June 2011 |
| | | JP 4634693 B2 | 16 February 2011 |
| | | JP 5017197 B2 | 05 September 2012 |
| | | JP 5192557 B2 | 08 May 2013 |
| | | KR 10-0858573 B1 | 17 September 2008 |
| | | KR 10-2004-0030538 A | 09 April 2004 |
| | | MY 153012 A | 31 December 2014 |
| | | PL 2195255 T3 | 31 May 2013 |
| | | US 2004-0197512 A1 | 07 October 2004 |
| | | US 2008-0305326 A1 | 11 December 2008 |
| | | US 2010-0221469 A1 | 02 September 2010 |
| | | US 2011-0008555 A1 | 13 January 2011 |
| | | US 2011-0020578 A1 | 27 January 2011 |
| | | US 2011-0151213 A1 | 23 June 2011 |
| | | US 2011-0165388 A1 | 07 July 2011 |
| | | US 2011-0165417 A1 | 07 July 2011 |
| | | US 2012-0040123 A1 | 16 February 2012 |
| | | US 2012-0045604 A1 | 23 February 2012 |
| | | US 2012-0114893 A1 | 10 May 2012 |
| | | US 2012-0177859 A1 | 12 July 2012 |
| | | US 2012-0201983 A1 | 09 August 2012 |

Form PCT/ISA/210 (patent family annex) (July 2022)

**INTERNATIONAL SEARCH REPORT**
**Information on patent family members**

International application No.
**PCT/KR2023/020740**

| Patent document cited in search report | Publication date (day/month/year) | Patent family member(s) | Publication date (day/month/year) |
|---|---|---|---|
| | | US 2013-0168440 A1 | 04 July 2013 |
| | | US 7687125 B2 | 30 March 2010 |
| | | US 8173234 B2 | 08 May 2012 |
| | | US 8182889 B2 | 22 May 2012 |
| | | US 8342389 B2 | 01 January 2013 |
| | | US 8709559 B2 | 29 April 2014 |
| | | US 9534152 B2 | 03 January 2017 |
| | | US 9656787 B2 | 23 May 2017 |
| | | WO 02-074874 A1 | 26 September 2002 |
| | | WO 2009-024812 A1 | 26 February 2009 |
| | | WO 2009-034377 A1 | 19 March 2009 |
| KR 10-2022-0121216 A | 31 August 2022 | CN 115803359 A | 14 March 2023 |
| | | EP 4163316 A1 | 12 April 2023 |
| | | EP 4163316 A4 | 27 September 2023 |
| | | JP 2023-538390 A | 07 September 2023 |
| | | US 2023-0279215 A1 | 07 September 2023 |
| | | WO 2022-182160 A1 | 01 September 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220176832
- KR 1020230182742